# EUROPÄISCHE PATENTSCHRIFT

(11) **EP 3 155 310 B1**
(45) Veröffentlichungstag und Bekanntmachung des Hinweises auf die Patenterteilung: **26.02.2020**
(21) Anmeldenummer: 15729338.2
(22) Anmeldetag: 05.06.2015
(51) Int. Cl.: F17C 1/06, F17C 1/16

(54) **VERFAHREN ZUM HERSTELLEN EINES DRUCKBEHÄLTERS**
METHOD FOR MANUFACTURING A PRESSURE VESSEL
PROCÉDÉ DE FABRICATION D'UN CONTENANT SOUS PRESSION

(30) Priorität: 13.06.2014 DE 102014008649
(43) Veröffentlichungstag der Anmeldung: 19.04.2017
(73) Patentinhaber: Hydac Technology GmbH, 66280 Sulzbach/Saar (DE)
(72) Erfinder: KLOFT, Peter, 56235 Ransbach-Baumbach (DE); BALTES, Herbert, 66679 Losheim (DE)
(74) Vertreter: Bartels und Partner, Patentanwälte
(86) Internationale Anmeldenummer: PCT/EP2015/001142
(87) Internationale Veröffentlichungsnummer: WO 2015/188925

(56) Entgegenhaltungen:
- WO-A1-2013/083161
- DE-A1-102006 004 121
- DE-A1-102011 116 553
- DE-A1-102012 013 937

## Beschreibung

Die Erfindung betrifft ein Verfahren zum Herstellen eines Druckbehälters mit den Verfahrensschritten des Oberbegriffs von Anspruch 1.

Für die Speicherung von flüssigen oder gasförmigen Medien dienende Druckbehälter kommen bei vielen technischen Systemen, in denen Druckfluide als Betriebsmittel benutzt werden, in verschiedenen Formen zum Einsatz, beispielsweise als hydropneumatische Speicher. In dem Bestreben, auf rationelle und kostengünstige Weise Druckbehälter zu erzeugen, die bei geringen Materialkosten und gleichzeitig niedrigem Baugewicht hohe Strukturfestigkeit zur Verfügung stellen, sich also durch Druckfestigkeit, insbesondere auch über einen Langzeitbetrieb, auszeichnen, ist es Stand der Technik, derartige Druckbehälter in Composite-Bauweise herzustellen. Dabei wird als eine Behälterkomponente eine einen Behälterkern bildende Tragstruktur, fachsprachlich als Liner bezeichnet, ausgebildet. Um trotz niedriger Wandstärke des Liners eine Behälter-Grundstruktur zu erhalten, die die gewünschte Strukturfestigkeit zur Verfügung stellt, wird auf dem Liner eine äußere Faserverstärkung mit Fasern hoher Zugfestigkeit aufgebracht.

Die DE 10 2012 013 937 A1 beschreibt ein gattungsgemäßes Verfahren zum Herstellen eines Druckbehälters, der vorzugsweise für den Einsatz bei Blasenspeichern vorgesehen ist, mit den folgenden Herstellschritten: Bereitstellen einer Tragstruktur, insbesondere in Form eines Liners; Aufbringen eines Fasermaterials auf die Tragstruktur unter Bildung einer Grundstruktur; Einbringen der Grundstruktur in eine beheizbare Formeinrichtung; und Einbringen einer Matrix zwischen der Formeinrichtung und der Grundstruktur, die in das Fasermaterial zumindest teilweise eindringt.

Ein weiteres Verfahren zur Herstellung eines Druckbehälters geht aus der DE 10 2011 116 553 A1 hervor.

Ausgehend von diesem Stand der Technik stellt sich die Erfindung die Aufgabe, ein Verfahren aufzuzeigen, nach dem Druckbehälter in Composite-Bauweise, die sich trotz geringem Baugewicht durch eine hohe Strukturfestigkeit auszeichnen, besonders rationell und kostengünstig herstellbar sind.

Erfindungsgemäß ist diese Aufgabe durch ein Verfahren gelöst, das die Verfahrensschritte des Patentanspruchs 1 in seiner Gesamtheit aufweist.

Gemäß dem Kennzeichen von Anspruch 1 ist vorgesehen, dass der Innendruck der Tragstruktur während des Einbringens der lösemittelhaltigen Matrix erhöht wird.

Danach sieht die Erfindung zusätzlich zur Ausbildung der aus Liner mit äußerer Faserverstärkung bestehenden Grundstruktur vor, dass diese in eine beheizbare Formeinrichtung eingebracht wird und dass zwischen der Formeinrichtung und der Grundstruktur eine Matrix eingeführt wird, die in das Fasermaterial zumindest teilweise eindringt. Durch das Einsetzen der außenseitig das Fasermaterial aufweisenden Grundstruktur in eine beheizbare Formeinrichtung und das Einbringen der Matrix in den zwischen der Formeinrichtung und der Grundstruktur gebildeten Zwischenraum lässt sich bei relativ kurzer Reaktionszeit ein Faserverbundstoff in einem Formprozess realisieren, bei dem die Fasern getränkt sind. Durch eine derart ausgebildete stützende Hülle ist eine hohe Druckfestigkeit bei besonders geringem Baugewicht erreichbar.

Da bei der Erfindung der die Matrix enthaltende Verbundstoff erst in der Formeinrichtung nach dem Aufbringen des Fasermaterials gebildet wird, eröffnet sich die vorteilhafte Möglichkeit, das Fasermaterial trocken auf die Tragstruktur, den Liner, aufzubringen, was bei dem trockenen Zustand des Fasermaterials auf einfache und rationelle Weise durch Bewickeln oder Legen von Geweben oder Umflechten erfolgen kann, wobei der Vorgang ohne Schwierigkeiten mit axialen und/oder tangentialen Wicklungsrichtungen erfolgen kann. Mit Vorteil können im Fall der axialen Umwicklung im zylindrischen Teil des Liners Faserlängsachsen im Winkel von 0° bis 25° zur Zylinderlängsachse vorgesehen sein, wobei auch die sog. Polkappen an den Enden des Liners mit der axialen Bewicklung gleichmäßig bewickelt werden können. Danach oder vorher kann, vorzugsweise alternierend, eine axiale und tangentiale Umwicklung des Liners erfolgen.

Mit Vorteil wird dabei so vorgegangen, dass der Liner mit dem Fasermaterial in axialer und tangentialer Richtung derart bewickelt wird, dass das Fasermaterial im Wesentlichen auf Zug belastet ist.

Bei besonders vorteilhaften Ausführungsbeispielen werden als Matrix reaktive Matrixsysteme, reaktive Harzsysteme, reaktive Polyamide, vorzugsweise Caprolactam, oder Polyurethansysteme (PU) eingesetzt.

In besonders vorteilhafter Weise wird die Matrix in die Formeinrichtung mittels eines Harz-Injektionsverfahrens, vorzugsweise unter einem Druck von 30 bar bis 40 bar, eingespritzt. Dieses bekannte Formverfahren wird fachsprachlich mit RTM, abgekürzt für Resin Transfer Moulding, bezeichnet.

Um der Matrix eine für die Injektion günstige Konsistenz zu verleihen, wird die Matrix vorzugsweise zusammen mit mindestens einem Lösungsmittel, vorzugsweise in Form von Isocyanat, in die Formeinrichtung derart eingebracht, dass die lösemittelhaltige Matrix das Fasermaterial auf der Tragstruktur durchtränkt und im ausgehärteten Zustand die Matrix das Fasermaterial schützend umschließt.

Vorzugsweise wird der Formvorgang in der Formeinrichtung derart durchgeführt, dass die Matrix nach der Entnahme aus der Formeinrichtung vollständig ausgehärtet und als fester Schutzmantelkörper in porenfreier Weise hergestellt wird. Durch porenfreie Ausbildung der Matrix wird vermieden, dass in der Matrix vorhandene Luft bei hohen Druckbelastungen in der Matrix feindispergiert in Lösung geht.

Bei vorteilhaften Ausführungsbeispielen wird zur Begünstigung des Injektionsvorganges an die Formeinrichtung während des Einbringens der lösemittelhaltigen Matrix ein Unterdruck angelegt und/oder der Innendruck der Tragstruktur durch Einbringen eines nicht-reaktiven kompressiblen oder inkompressiblen Druckmediums, wie Stickstoffgas bzw. Wasser oder Öl, in die Tragstruktur erhöht.

Die Formgebungstemperatur wird vorzugsweise unter 100 °C gewählt, wobei die Formzeit weniger als 10 Minuten, vorzugsweise etwa 8 Minuten, beträgt.

Um den Entformvorgang zu begünstigen, kann ein Trennmittel, wie Indrosil®2000 von der Firma Indroma Chemikalien, Bad Soden, Deutschland, zum Einsatz gebracht werden. Das Trennmittel kann auch in der Matrix "eingebaut" und mithin integraler Bestandteil der Matrix sein.

Als Tragstruktur kann ein Liner aus Stahlmaterialien oder ein aus Kunststoffmaterialien aufgebauter Liner zum Einsatz kommen, der jeweils als Hohlkörper ausgebildet an seinen gegenüberliegenden Enden mit einer Durchgangsöffnung versehen wird.

Bei aus einem Kunststoffmaterial gebildetem Liner kann dieser bevorzugt aus Polyamid oder Polyethylen gebildet sein, beispielsweise mittels eines Blasformprozesses oder durch Rotationssintern. Dahingehende Herstellverfahren sind üblich, so dass an dieser Stelle hierauf nicht mehr näher eingegangen wird. Die Ausbildung des Liners aus metallischem Werkstoff, beispielsweise in zusammengesetzter Bauweise, ist ebenfalls Stand der Technik.

Nachstehend ist die Erfindung anhand der beigefügten Zeichnungen näher erläutert. Es zeigen:
- Fig. 1: im Längsschnitt und in schematisch stark vereinfachter und prinzipieller Darstellung eine Formeinrichtung zur Durchführung des erfindungsgemäßen Verfahrens, wobei in die Formeinrichtung eine Behälter-Grundstruktur als Halbzeug eines zu fertigenden Druckbehälters eingesetzt ist;
- Fig. 2: einen Längsschnitt des nach dem erfindungsgemäßen Verfahren gefertigten Druckbehälters; und
- Fig. 3: einen vergrößert gezeichneten Ausschnitt des in Fig. 2 mit III bezeichneten Bereichs.

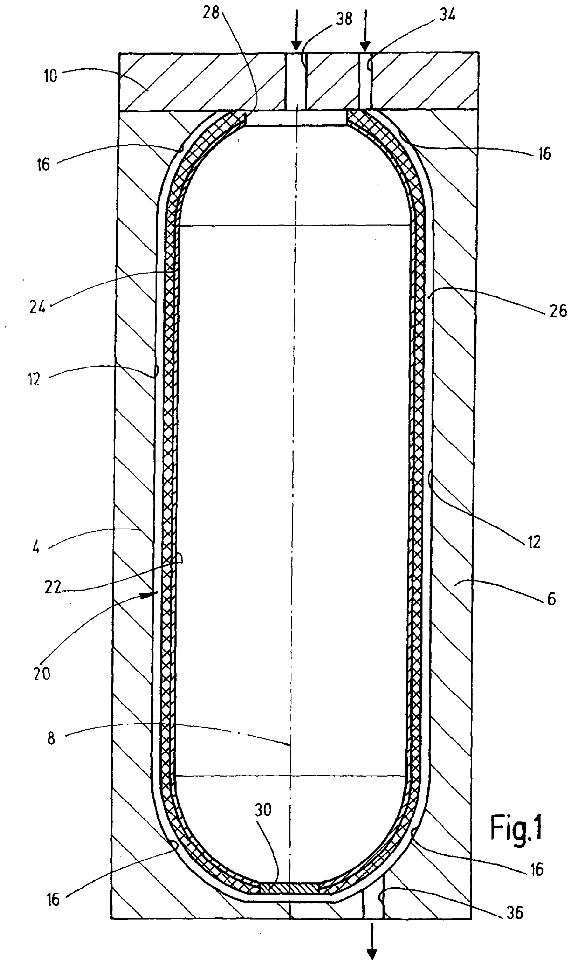

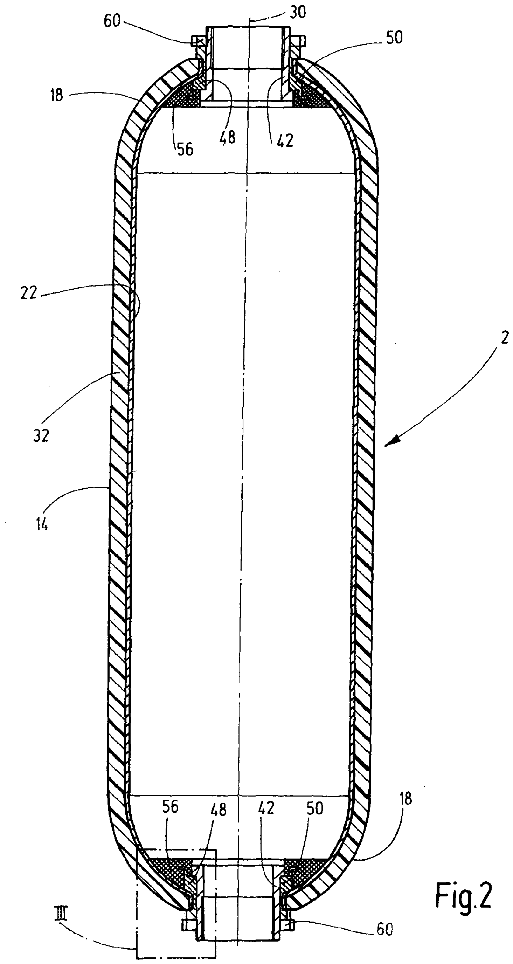

Die Fig. 1 zeigt in schematisch vereinfachter Darstellung eine Formeinrichtung, mittels deren nach dem erfindungsgemäßen Verfahren ein Druckbehälter herstellbar ist, wie er in Fig. 2 gezeigt und dort als Ganzes mit 2 bezeichnet ist. Die Formeinrichtung weist als Formhälften zwei Formteile 4 und 6 auf, die senkrecht zu einer Längsachse 8 gegeneinander und voneinander weg bewegbar sind. In Fig. 1 sind die Formteile 4, 6 in zusammengefahrener, dem geschlossenen Zustand der Form entsprechender Position gezeigt. Am in Fig. 1 oberen Ende ist die Form durch ein bewegbares Kopfteil 10 schließbar, das in der Schließposition dargestellt ist. Die inneren Formwände der Formteile 4, 6, die die Außenform des fertigen Druckbehälters 2 vorgeben, weisen bei jedem Formteil 4, 6 einen mittleren, halbzylinderförmigen Hauptteil 12, der beim fertigen Druckbehälter 2 dessen Zylinderteil 14 formt, sowie an das Hauptteil 12 anschließende, gewölbte Endteile 16 auf, die die endseitigen Polkappen 18 beim fertigen Druckbehälter 2 formen. Die Formteile 4, 6 und das Kopfteil 10 sind beheizbar. Dem Stand der Technik entsprechend ausgebildete Heizeinrichtungen sind in Fig. 1 nicht dargestellt, die beispielsweise durch eingebettete elektrische Heizleiter oder Kanäle für den Durchstrom eines Heizmediums, wie Dampf, gebildet sein können.

In die geöffnete Formeinrichtung wird als Halbzeug die Behälter-Grundstruktur 20 (Fig. 1) eingesetzt und ist dort entsprechend fixiert (nicht dargestellt), wonach die Formeinrichtung geschlossen wird, wie es in Fig. 1 gezeigt ist. Die Grundstruktur 20 besteht aus dem die Tragstruktur oder den Behälterkern bildenden Liner 22 mit darauf befindlicher Faserverstärkung 24. Bei der Vorfertigung der Grundstruktur 20 wird der Liner 22 in an sich bekannter Weise aus einem metallischen Werkstoff, wie Stahl oder Aluminium, oder aus einem Kunststoff, wie Polyamid oder Polyethylen, hergestellt, wobei in diesem Falle ein Blasformverfahren oder Rotationssintern in Frage kommt.

Die Faserverstärkung 24 wird im Zuge der Vorfertigung der Grundstruktur 20 durch Bewickeln oder Umflechten des Liners 22 mit dem trockenen Fasermaterial aufgebracht. Als Material können Fasern aus Kohlenstoff, Aramid, Glas, Bor oder Textilfasern benutzt werden, ebenso kommen Hybridgarne oder Naturfasern in Betracht, wie Basalt, Flachs, Hanf, Baumwolle, Bambus und dergleichen. Das trockene Aufbringen des Fasermaterials erfolgt in Form eines Bewickelns oder Umflechtens des Liners 22 mit axialen und tangentialen Wicklungsrichtungen, wobei in den axial verlaufenden Wicklungsbereichen bei der Umwicklung des Zylinderteils 14 die Ausrichtung der Wicklungsrichtung vorzugsweise 0° bis 25° zur Zylinderachse beträgt und die axiale Bewicklung sich auch gleichmäßig über die Polkappen 18 erstreckt. Vorausgehend oder nachfolgend finden tangentiale Umwicklungen alternativ zu axialen Umwicklungen statt, wobei der Wicklungsaufbau derart stattfindet, dass das Fasermaterial vorzugsweise auf Zug belastet ist.

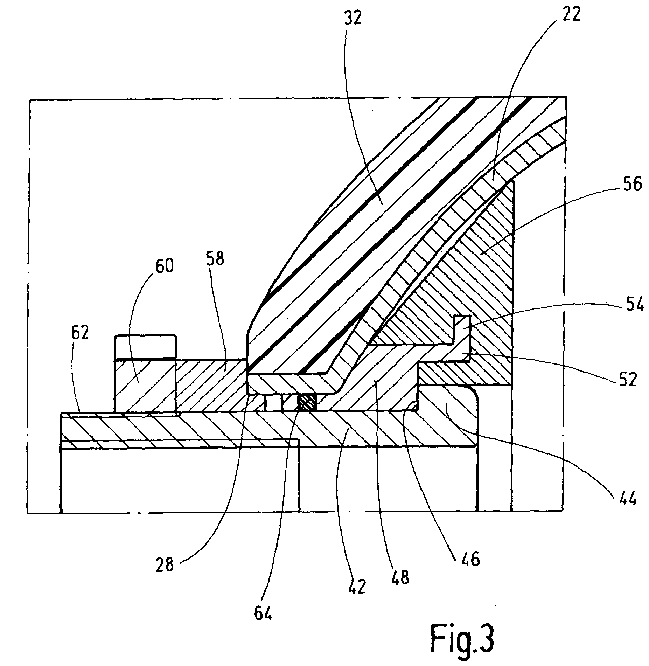

Wie Fig. 1 zeigt, ist bei geschlossener Formeinrichtung zwischen den inneren Formwänden der Formteile 4, 6 und der Außenseite der Faserverstärkung 24 ein Zwischenraum 26 gebildet, der die Außenseite der Faserverstärkung 24 zwischen dem in Fig. 1 obenliegenden, offenen Ende 28 der Grundstruktur 20 bis zum durch ein Verschlussteil 30 geschlossenen, unteren Ende vollständig umgibt. In diesem Zwischenraum 26 wird durch Einbringen einer Matrix, die die trockene Faserverstärkung 24 durchtränkt, aus dieser nach ihrem vollständigen Aushärten ein fester Schutzmantelkörper 32 gebildet, siehe Fig. 2 und 3. Für das Einbringen der Matrix in einer für einen Injektionsvorgang geeigneten Konsistenz ist am Kopfteil 10 der Formeinrichtung eine Einströmöffnung 34 vorgesehen, die in den Zwischenraum 26 mündet.

Als Matrix können reaktive Harzsysteme, reaktive Polyamide, vorzugsweise Caprolactam, oder Polyurethansysteme (PU) eingesetzt werden, wobei vorzugsweise ein Lösungsmittel, wie Isocyanat, zugesetzt ist, um das Durchtränken des Fasermaterials zu begünstigen. Über einen am in Fig. 1 unten liegenden Formendteil 16 vorgesehenen Sauganschluss 36, an dem zur Unterstützung des Injektionsvorgangs ein Unterdruck anliegt, wird die bei der Injektion verdrängte Luft abgeführt. Für die Durchführung eines Harz-Injektionsverfahrens (RTM) wird die Matrix bei einer Temperatur der Formeinrichtung, die etwa im Bereich von 70 °C bis 90 °C oder auch höher liegt, unter Druck injiziert. Um eine Verformung der Grundstruktur 20 durch den Injektionsdruck zu vermeiden, wird während des Injektionsvorgangs ein Überdruck im Inneren des Liners 22 aufgebaut. Das Kopfteil 10 weist hierfür einen Druckanschluss 38 auf, über den Stützluft, wie Stickstoffgas, zugeführt wird. Vorzugsweise wird jedoch die Tragstruktur oder der Liner 22 mit einem inkompressiblen Fluid, Wasser oder Öl, befüllt.

Nach einer Reaktionszeit von weniger als 10 Minuten, vorzugsweise von etwa 8 Minuten, wird die Formeinrichtung geöffnet und der Druckbehälter 2 mit seinem Schutzmantelkörper 32 entnommen, der aus dem mit der Matrix getränkten Fasermaterial gebildet ist und der in vollständig ausgehärtetem Zustand porenfrei ist. Nach Entfernen des Verschlussteils 30 kann der gebildete Druckbehälter 2 an beiden gegenüberliegenden Enden mit einer bei derartigen Behältern üblichen Anschlussarmatur versehen werden.

Die Fig. 2 und 3 zeigen den fertiggestellten Druckbehälter 2 mit Anschlussarmaturen, die jeweils durch einen Rohrstutzen 42 in der Form eines sogenannten genormten SAE-Flansches ausgebildet sind. Die Fig. 3 zeigt in vergrößerter Darstellung nähere Einzelheiten des an beiden Behälterenden gleich ausgebildeten Rohrstutzens 42. Wie ersichtlich, weist dieser am inneren Ende einen Bund 44 auf, der eine Schulterfläche 46 als Anschlagfläche für eine Ringhälfte 48 bildet. Die Ringhälfte 48 bildet zusammen mit einer gleich ausgebildeten zweiten Ringhälfte 50 (Fig. 2) einen den Rohrstutzen 42 umgebenden Ringkörper. Jede Ringhälfte 48, 50 weist einen in Richtung auf das Behälterinnere axial vorstehenden Haltering 52 mit einem radial vorstehenden Endrand 54 auf. Dieser bildet eine Art Sicherungshaken, der durch Eingriff in eine Schlitzöffnung einer Ringscheibe 56 aus elastomerem Material diese durch Verhakung sichert.

Außerhalb der Ringhälfte 48, 50 ist auf der Außenseite des Rohrstutzens 42 ein Druckring 58 gelagert, der sich am offenen Ende 28 am Liner 22 abstützt. Eine Mutter 60, die auf einem Außengewinde 62 des Rohrstutzens 42 sitzt, liegt an der Außenseite des Druckringes 58 an. Durch Festziehen der Mutter 60, die über den Druckring 58 am Liner 22 abgestützt ist, entsteht im Rohrstutzen 42 eine aus dem Behälterinneren nach außen gerichtete Zugkraft, die über die Schulterfläche 46 am Bund 44 auf die Ringhälften 48, 50 übertragen wird. Über den Haltering 52 mit radial vorstehendem Endrand 54 wird dadurch die elastomere Ringscheibe 56 gegen die Innenseite des Liners 22 verspannt und bildet eine Abdichtung. Eine weitere Abdichtung ist durch einen O-Ring 64 an der Innenseite des Endabschnitts des Liners 22 vorgesehen.

Weitere Einzelheiten des erfindungsgemäßen Verfahrens sind dem nachstehend angegebenen Beispiel entnehmbar.

### Beispiel:

Ein für einen Composite-Druckbehälter vorgesehener Liner wird auf konventionelle Weise mit einem Werkstoffgewicht von 864 g hergestellt. Durch Bewickeln des Liners mit Fasermaterial, dessen Masse 250 g beträgt, wird eine Behälter-Grundstruktur gebildet, wobei das Bewickeln mit axialen und tangentialen Wicklungsrichtungen zur Bildung einer Faserverstärkung erfolgt. Als Fasermaterial wird eine Hochleistungs-Kohlenstofffaser benutzt, die von Toho Tenax® mit der Produktbezeichnung HTS45 E23 12k mit Garnfeinheit 800 tex hergestellt ist.

Die bewickelte Grundstruktur wird in eine Formeinrichtung eingesetzt, deren prinzipieller Aufbau in Fig. 1 gezeigt ist und die beheizbare Formteile aufweist. Bei einer inneren Werkzeugtemperatur der Formteile von 87 °C und einer Außentemperatur der Formteile von 77 °C wird zur Durchführung eines Harzinjektionsverfahrens (RTM) in den Formzwischenraum zwischen Faserverstärkung und benachbarten Formwänden eine Matrix injiziert, wobei am Formzwischenraum ein Vakuum von 200 mbar ansteht und im Inneren des Liners ein Stützdruck von 15 bar mittels Stickstoffgas erzeugt ist.

Als Matrix wird ein Polyurethan-System (PU) injiziert, das als eine Mischkomponente Elastolit® R8819/104/LT der Firma BASF, Ludwigshafen, Deutschland, als zweite Mischkomponente Polyol A.4.D.22.6/196-R1 (Handelsname Elastolit R8819/104 von BASF) sowie als Lösemittelzusatz Isocyanat IsoMNDI 92050 aufweist. Außerdem ist ein Zusatz von Indrosil®2000 von der Firma Indroma® Chemikalien, Bad Soden, Deutschland, als Trennmittel vorgesehen, der beim Öffnen der Formeinrichtung den Trennvorgang zwischen Form und hergestelltem Formkörper begünstigt.

Die Grundstruktur mit der von der Matrix durchtränkten Faserverstärkung verbleibt während einer Reaktionszeit von 8 Minuten in der geschlossenen Formeinrichtung. Nach Öffnen der Formeinrichtung weist der entnommene Druckbehälter einen vollständig ausgehärteten, festen Schutzmantelkörper auf, der porenfrei ist.

## Patentansprüche

1. Verfahren zum Herstellen eines Druckbehälters (2), der vorzugsweise für den Einsatz bei Blasenspeichern vorgesehen ist, mit den folgenden Herstellschritten:
- Bereitstellen einer Tragstruktur (22), insbesondere in Form eines Liners;
- Aufbringen eines Fasermaterials (24) auf die Tragstruktur (22) unter Bildung einer Grundstruktur (20);
- Einbringen der Grundstruktur (20) in eine beheizbare Formeinrichtung (4, 6, 10); und
- Einbringen einer Matrix zwischen der Formeinrichtung (4, 6, 10) und der Grundstruktur (20), die in das Fasermaterial (24) zumindest teilweise eindringt,
**dadurch gekennzeichnet, dass** der Innendruck der Tragstruktur (22) während des Einbringens der lösemittelhaltigen Matrix erhöht wird.

2. Verfahren nach Anspruch 1, **dadurch gekennzeichnet, dass** das Aufbringen des Fasermaterials (24) trocken auf die Tragstruktur (22) erfolgt und in Form eines Bewickelns oder Umflechtens stattfindet.

3. Verfahren nach Anspruch 1 oder 2, **dadurch gekennzeichnet, dass** die Tragstruktur (22) derart mit dem Fasermaterial (24) in axialer und tangentialer Richtung bewickelt wird, dass das Fasermaterial (24) im Wesentlichen auf Zug belastet ist.

4. Verfahren nach einem der vorstehenden Ansprüche, **dadurch gekennzeichnet, dass** als Matrix
- reaktive Harzsysteme;
- reaktive Polyamide, vorzugsweise Caprolactam; oder
- Polyurethansysteme (PU)
eingesetzt werden.

5. Verfahren nach einem der vorstehenden Ansprüche, **dadurch gekennzeichnet, dass** die Matrix in die Formeinrichtung (4, 6, 10) mittels eines Harz-Injektionsverfahrens, vorzugsweise unter einem Druck von 30 bar bis 40 bar, eingespritzt wird.

6. Verfahren nach einem der vorstehenden Ansprüche, **dadurch gekennzeichnet, dass** die Matrix zusammen mit mindestens einem Lösungsmittel, vorzugsweise in Form von Isocyanat, in die Formeinrichtung (4, 6, 10) derart eingebracht wird, dass die lösemittelhaltige, fluidförmige Matrix das Fasermaterial (24) der Tragstruktur (22) durchtränkt und im ausgehärteten Zustand die Matrix das Fasermaterial (24) schützend umschließt.

7. Verfahren nach einem der vorstehenden Ansprüche, **dadurch gekennzeichnet, dass** die Matrix nach der Entnahme aus der Formeinrichtung (4, 6, 10) vollständig ausgehärtet als fester Schutzmantelkörper (32) in porenfreier Weise hergestellt wird.

8. Verfahren nach einem der vorstehenden Ansprüche, **dadurch gekennzeichnet, dass** an die Formeinrichtung (4, 6, 10) während des Einbringens der lösemittelhaltigen Matrix ein Unterdruck angelegt wird und/oder der Innendruck der Tragstruktur (22) durch Einbringen eines nicht-reaktiven, kompressiblen oder inkompressiblen Druckmediums, wie Stickstoffgas bzw. Wasser oder Öl, erhöht wird.

9. Verfahren nach einem der vorstehenden Ansprüche, **dadurch gekennzeichnet, dass** die Formgebungstemperatur unter 100 °C gewählt wird und die Formzeit weniger als 10 Minuten, vorzugsweise etwa 8 Minuten, beträgt.

10. Verfahren nach einem der vorstehenden Ansprüche, **dadurch gekennzeichnet, dass** als Tragstruktur ein Liner (22) aus Stahlmaterialien oder ein aus Kunststoffmaterialien aufgebauter Liner (22) zum Einsatz kommt, der jeweils als Hohlkörper ausgebildet an seinen gegenüberliegenden Enden mit einer Durchgangsöffnung (42) versehen wird.

## Claims

1. Method for manufacturing a pressure vessel (2), which is preferably provided for use in bladder accumulators, comprising the following manufacturing steps:
- Providing a support structure (22), more particularly in the form of a liner;
- Applying a fibrous material (24) to the support structure (22) to form a base structure (20);
- Placing the base structure (20) in a heatable mould apparatus (4, 6, 10); and
- Introducing a matrix between the mould apparatus (4, 6, 10) and the base structure (20), which at least partially penetrates the fibrous material (24),
**characterised in that** the inner pressure of the support structure (22) is increased during introduction of the solvent-based matrix.

2. Method according to claim 1, **characterised in that** the fibrous material (24) is applied dry to the support structure (22) and is effected in the form of winding or braiding.

3. Method according to claim 1 or 2, **characterised in that** the support structure (22) is wound with the fibrous material (24) in the axial and tangential direction in such a manner that the fibrous material (24) is substantially subject to tension.

4. Method according to one of the preceding claims, **characterised in that**
- reactive resin systems;
- reactive polyamides, preferably caprolactam; or
- polyurethane systems (PU)
are used as the matrix.

5. Method according to one of the preceding claims, **characterised in that** the matrix is injected into the mould apparatus (4, 6, 10) using a resin injection process, preferably under a pressure of 30 to 40 bar.

6. Method according to one of the preceding claims, **characterised in that** the matrix, together with at least one solvent, preferably in the form of isocyanate, is introduced into the mould apparatus (4, 6. 10) in such a manner that the solvent-based, fluid matrix impregnates the fibrous material (24) of the support structure (22) and in the cured state the matrix surrounds the fibrous material (24) in a protective manner.

7. Method according to one of the preceding claims, **characterised in that** after removal from the mould apparatus (4, 6, 10) fully cured, the matrix is produced as a solid protective shell body (32) in a pore-free manner.

8. Method according to one of the preceding claims, **characterised in that** a vacuum is applied to the mould apparatus (4, 6, 10) during the introduction of the solvent-based matrix and/or the internal pressure of the support structure (22) is increased by the introduction of a non-reactive, compressible or incompressible pressure medium, such as nitrogen gas and water respectively or oil.

9. Method according to one of the preceding claims, **characterised in that** the moulding temperature is selected below 100 °C and the moulding time is less than 10 minutes, preferably approximately 8 minutes.

10. Method according to one of the preceding claims, **characterised in that** a liner (22) made of steel materials or a liner (22) constructed of plastics materials is used as the support structure, said liner being designed in each case as a hollow body, provided with a through-opening (42) at its opposing ends.

## Revendications

1. Procédé de fabrication d'un récipient (2) résistant à la pression, prévu pour être utilisé de préférence dans des accumulateurs à vessie, comprenant les stades de procédé suivants :
- on se procure une structure (22) de support, notamment sous la forme d'une chemise ;
- on dépose une matière (24) fibreuse sur la structure (22) de support, en formant une structure (20) de base ;
- on introduit la structure (20) de base dans un dispositif (4, 6, 10) de moulage pouvant être chauffé ; et
- on introduit, entre le dispositif (4, 6, 10) de moulage et la structure (20) de base, une matrice, qui pénètre au moins en partie dans la matière (24) fibreuse,
**caractérisé en ce que** l'on élève la pression interne de la structure (22) de support pendant l'introduction de la matrice contenant du solvant.

2. Procédé suivant la revendication 1, **caractérisé en ce que** le dépôt de la matière (24) fibreuse s'effectue à sec sur la structure (22) de support et a lieu sous la forme d'un enroulement ou d'un tressage.

3. Procédé suivant la revendication 1 ou 2, **caractérisé en ce que** l'on enroule la structure (22) de support de la matière (24) fibreuse suivant la direction axiale et tangentielle, de manière à soumettre la matière (24) fibreuse sensiblement à une traction.

4. Procédé suivant l'une des revendications précédentes, **caractérisé en ce que** l'on utilise comme matrice
- des systèmes de résine réactifs ;
- des polyamides réactifs, de préférence du caprolactame ; ou
- des systèmes de polyuréthane (PU).

5. Procédé suivant l'une des revendications précédentes, **caractérisé en ce que** l'on injecte la matrice dans le dispositif (4, 6, 10) de moulage au moyen d'un procédé d'injection de résine, de préférence sous une pression de 30 bar à 40 bar.

6. Procédé suivant l'une des revendications précédentes, **caractérisé en ce que** l'on introduit, dans le dispositif (4, 6, 10) de moulage, la matrice ensemble avec au moins un solvant, de préférence sous la forme d'isocyanate, de manière à ce que la matrice, contenant du solvant et sous forme fluide, imprègne la matière (24) fibreuse de la structure (22) de support et, à l'état durci, la matrice entoure la matière (24) fibreuse en la protégeant.

7. Procédé suivant l'une des revendications précédentes, **caractérisé en ce que** l'on produit la matrice d'une manière sans pore, après le retrait du dispositif (4, 6, 10) de moulage, complètement durcie sous la forme d'un corps (32) formant enveloppe de protection.

8. Procédé suivant l'une des revendications précédentes, **caractérisé en ce que** l'on applique au dispositif (4, 6, 10) de moulage, pendant l'introduction de la matrice contenant du solvant, une dépression et/ou on élève la pression interne de la structure (22) de support par introduction d'un fluide sous pression non réactif, compressible ou incompressible, comme de l'azote gazeux ou de l'eau ou de l'huile.

9. Procédé suivant l'une des revendications précédentes, **caractérisé en ce que** l'on choisit la température de moulage inférieure à 100°C et la durée de moulage est inférieure à 10 minutes, de préférence d'environ 8 minutes.

10. Procédé suivant l'une des revendications précédentes, **caractérisé en ce que** l'on utilise, comme structure de support, une chemise (22) en matériau en acier ou une chemise (22) constituée de matière plastique, qui, constituée, respectivement, sous la forme d'une pièce creuse, est pourvue à ses extrémités opposées d'une ouverture (42) de passage.
